(19) Europäisches Patentamt

European Patent Office

Office européen des brevets

(11) **EP 0 512 283 B1**

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int Cl.$^6$: **C08G 65/44**

(21) Anmeldenummer: **92106408.5**

(22) Anmeldetag: **14.04.1992**

(54) **Verfahren zur Herstellung von Polyphenylenethern**

Process for preparing polyphenylene ethers

Procédé pour la préparation de polyéthers de phényline

(84) Benannte Vertragsstaaten:
**BE DE FR GB NL**

(30) Priorität: **02.05.1991 DE 4114247**

(43) Veröffentlichungstag der Anmeldung:
**11.11.1992 Patentblatt 1992/46**

(73) Patentinhaber: **BASF Aktiengesellschaft**
**67063 Ludwigshafen (DE)**

(72) Erfinder:
 • **Zeltner, Doris, Dr.**
 **W-6725 Roemerberg (DE)**
 • **Steiert, Peter, Dr.**
 **W-6700 Ludwigshafen (DE)**

 • **Feldmann, Heike, Dr.**
 **W-6800 Mannheim 1 (DE)**
 • **Muehlbach, Klaus, Dr.**
 **W-6718 Gruenstadt (DE)**
 • **Hedtmann-Rein, Carola, Dr.**
 **W-6945 Hirschberg (DE)**
 • **Czauderna, Bernhard, Dr.**
 **W-6945 Hirschberg (DE)**
 • **Hennig, Karl**
 **W-6717 Hessheim (DE)**

(56) Entgegenhaltungen:
 **US-A- 4 335 234** **US-A- 4 463 164**

 • **ULLMANN'S ENCYCLOPEDIA OF INDUSTRIAL CHEMISTRY, 5. Auflage, Band A11, 1988, Verlag Chemie, Weinheim (DE); Seiten 466-490**

**Beschreibung**

Die Erfindung betrifft ein verbessertes Verfahren zur Herstellung von Polyphenylenethern aus einwertigen Phenolen durch oxidative Kupplungsreaktion mit sauerstoffhaltigen Gasen in Anwesenheit eines Oxidationskatalysators in einem organischen Lösungsmittel.

Polyphenylenether und Verfahren zu ihrer Herstellung sind an sich bekannt und in zahlreichen Veröffentlichungen, z.B. den US-A 3 306 874, 3 306 875, der EP-A 111 722 und M. Bartmann et al: Makromol. Chem. 189, 2285-2292 (1988), beschrieben.

Die für die Herstellung von Polyphenylenethern verwendeten Verfahren basieren vorwiegend auf der Selbstkondensation eines einwertigen Phenols in Anwesenheit eines sauerstoffhaltigen Gases und eines Katalsysators. Für eine wirkungsvolle Nutzung des Prozesses ist es wünschenswert, daß sich die Ausgangsstoffe möglichst schnell zu möglichst reinen Produkten umsetzen. Die Reaktionsgeschwindigkeit läßt sich aber durch Erhöhung der Reaktionstemperatur oder der Gaszufuhr nicht beliebig steigern, da sich hierbei technische Probleme ergeben und vermehrt Nebenprodukte gebildet werden, die die Polyphenylenether verfärben.

Aus der US-A 4,335,234 war ein Verfahren bekannt, wonach die Polymerisationsreaktion zur Herstellung von Polyphenylenethern in einem Lösungsmittelgemisch, bestehend aus einem aromatischen Kohlenwasserstoff und einem in Wasser unlöslichen Alkohol, durchgeführt wird, damit der Polyphenylenether nach Abschluß des Molekulargewichtsaufbaus besser aus dem Reaktionsmedium ausgefällt werden kann.

Der vorliegenden Erfindung lag daher die Aufgabe zugrunde, die Reaktionszeiten gegenüber denen der herkömmlichen Verfahren zu verkürzen und gleichzeitig die Farbqualität der Verfahrensprodukte zu verbessern.

Demgemäß wurde ein Verfahren zur Herstellung von Polyphenylenethern aus einwertigen Phenolen durch oxidative Kupplungsreaktion mit sauerstoffhaltigen Gasen in Anwesenheit eines Oxidationskatalysators in einem organischen Lösungsmittel gefunden, welches dadurch gekennzeichnet ist, daß man die Polykondensation in Gegenwart von 0,001 bis 1 Gew.-%, bezogen auf die gesamte Reaktionsmasse, an naphthenischen oder paraffinischen Mineralölen, paraffinischen Kohlenwasserstoffwachsen, Fettsäureestern mono- oder polyfunktioneller Alkohole, Fettsäureamiden, Fettsäuresulfonamiden oder Organopolysiloxanen als Entschäumer durchführt.

Für zahlreiche Anwendungsgebiete sind verschiedene Entschäumersysteme entwickelt worden, wie aus der Literatur ersichtlich ist (z.B. Ullmanns Encyclopedia of Technical Chemistry, 5th Ed., Verlag Chemie, Weinheim (1988), Vol. A8, p. 366 ff, Vol. All, p. 466 ff; P. G. Pape: J. Petrochem. Techn. 1197 (1983); H.T. Kerner: Foam Control Agents, Chem. Technol. Rev. No. 75, Noyes Data Corporation, Park Ridge (1976)).

Für das erfindungsgemäße Verfahren eignen sich ölartige Entschäumer aus der gruppe naphthenische und paraffinische Mineralöle, paraffinische Kohlenwasserstoffwachse, Fettsäureester mono- oder polyfunktioneller Alkohole, Fettsäureamide und -sulfonamide sowie Organopolysiloxane. Außerdem können Emulsionen der ölartigen Verbindungen in Wasser, einem anderen polaren Medium oder einer Mischung einer polaren Flüssigkeit mit Wasser entschäumend wirken. Ebenso vorteilhaft sind Entschäumer auf der Basis von Suspensionen eines teilchenförmigen, unter den Reaktionsbedingungen inerten Feststoffs in der ölartigen Verbindung sowie Suspensionen, die zusätzlich Wasser, ein anderes polares Medium oder eine Mischung einer polaren Flüssigkeit mit Wasser enthalten. Ferner kommen feste Entschäumerformulierungen in Betracht, die den Entschäumerwirkstoff erst nach Zugabe zum Reaktionsgemisch freisetzen.

Bevorzugte ölartige Entschäumerkomponenten sind Organopolysiloxane. Bei diesen handelt es sich z.B. um Alkyl-, Alkoxy-, Aryl-, Aralkyl-, Aryloxy-, und alicyclische Polysiloxane. Typische Beispiele für Alkylpolysiloxane sind Dimethyl-, Diethyl-, Dipropyl- und Methylbutyl-polysiloxane. Dabei können die Alkylreste linear oder verzweigt sein. Ebenso können sie mit Halogenatomen substituiert sein. So kommen z.B. Chlorethyl, Chlorpropyl und Chlorbutyl enthaltende Polysiloxane in Betracht. Fluorierte Organopolysiloxane sind ebenso zu nennen. Zu dieser Gruppe gehören Perfluoroalkylpolysiloxane, z.B. Poly(methyl-3,3,3-trifluoropropyl)siloxan oder Poly(methyl-3,3,4,4,4-pentafluorobutyl)-siloxan. Zu den Aryl-, Aralkyl- und Aryloxyresten mit denen die Siloxane substituiert sein können, zählen Phenyl-, Chlorphenyl-, Diphenyl-, Naphthyl-, Tolyl-, Ethylphenyl-, Propyl-phenyl- und Phenyloxyreste. Unter den Alkoxyresten sind insbesondere Methoxy-, Ethoxy-, Propoxy-, Butoxy-, Pentoxy- und Hexoxyreste zu verstehen, die linear oder verzweigtkettig sein können. Die alicyclischen Ringe sind insbesondere fünf- oder sechsgliedrig und können entweder unsusbtituiert oder mit Alkylresten oder Halogenatomen substituiert sein. Ebenso kommen Polysiloxane in Betracht, die Cyano- oder Aldehydgruppen tragen, wie Cyanoalkylpolysiloxane, z.B. Poly(cyanomethyl)methylsiloxan, Poly(2-cyanoethyl)methylsiloxan, Poly(3-cyanopropyl)methylsiloxan, Poly(4-cyanobutyl)methylsiloxan, Poly(5-cyanopentyl)methylsiloxan, Poly(cyanomethyl)ethylsiloxan und Poly(2-cyanoethyl)ethylsiloxan.

Auch sind Copolymerisate verschiedener Organopolysiloxane, darunter solche aus nichtfluorierten Organopolysiloxanen mit Perfluoroalkylpolysiloxanen, zu nennen. Ebenso können Copolymerisate aus einem Organopolysiloxan und anderen Polymeren eingesetzt werden, z.B. Alkylpolysiloxan-Polyoxyalkylen-Blockpolymerisate oder Copolymere aus Alkylpolysiloxanan und fluorierten Polyolefinen.

Erfindungsgemäß eignen sich insbesondere Alkylpolysiloxane und fluorierte Organopolysiloxane. Besonders vorteilhaft sind Dimethylpolysiloxane sowie fluorierte Organopolysiloxane.

Mischungen aus zwei oder mehr ölartigen Verbindungen, z.B. aus einem Mineralöl und einem Organopolysiloxan können ebenfalls als ölartige Komponente des Entschäumers dienen.

Die Viskositäten der ölartigen Verbindungen sind nach den bisherigen Beobachtungen nicht kritisch. Sie können bei 25°C zwischen 5 - 100 000 mm²/s und bei den Temperaturen, bei denen sie wirksam sein sollen, zwischen 15 und 70 m²/s liegen.

Die ölartigen Verbindungen lassen sich auch emulgiert in Wasser oder einem anderen polaren Medium, worunter auch wasserhaltige polare Flüssigkeiten zu verstehen sind, als Entschäumer einsetzen. Zweckmäßigerweise werden aliphatische Kohlenwasserstoffe mit polaren funktionellen Gruppen, z.B. Ester oder Ketone, chlorierte Kohlenwasserstoffe wie 1,1,1-Trichlorethan oder Alkohole wie Glykol als externe (kohärente) Phase verwendet.

Oxyethylierte Fettalkohole, Fettsäuren, Hydrofettsäuretriglyceride und Glycerinmonofettsäureester eignen sich als Emulgatoren. Bevorzugt werden Sorbitöl und Sorbitanester. Insbesondere eignen sich Nonylphenyl-, Oleyl- und Stearylpolyglykolether.

Definitionsgemäß können die Entschäumer einen teilchenförmigen, unter den Reaktionsbedingungen inerten Feststoff enthalten. Im allgemeinen weisen diese eine Teilchengröße von 5 - 100 μm (längster Durchmesser) und eine Oberfläche von 50 - 400 m2/g auf. Alle Mineralien, die üblicherweise als Füllstoffe in Entschäumerformulierungen verwendet werden, eignen sich auch für das erfindungsgemäße Verfahren. Darunter sind Aluminiumoxid, Titandioxid, Kieselsäure, Perlit und Tone; bevorzugt werden jedoch Kieselsäuren, wie sie beispielsweise durch Flammhydrolyse von $SiCl_4$ oder durch Ausfällen von wasserlöslicher Kieselsäure mit Dimethyldichlorsilan (Fällungskieselsäure) erhältlich sind (synthetische Kieselsäuren).

Zweckmäßigerweise werden die Mineralien durch bekannte Methoden entweder durch eine Vorbehandlung oder in situ hydrophobiert. Bei derartigen Vorbehandlungen werden die Mineralien mit organischen Verbindungen oder Silikonreagentien behandelt, die mindestens eine der folgenden funktionellen Gruppen tragen: -OH, -NH$_2$, -SH, -NHR, -NH2, -NH$_3$ oder -NR$_4$, wobei diese mit den sauren Zentren der Mineralienoberfläche reagieren können. Typische Reagentien schließen Disilazane oder Silane ein, wie Hexamethyldisilazan, Trichloroctadecylsilan oder Chlortrimethylsilan, wobei letztere z.B. durch Hydrolyse in die Hydroxide überführt werden können. Zusätzlich kommen primäre, sekundäre und quartäre Alkyl- und Alkyletheramine in Betracht. Kieselsäuren werden üblicherweise dadurch hydrophobiert, daß die Teilchen, gewünschtenfalls in Gegenwart eines Lösungsmittels, im hydrophobierenden Reagens heftig bewegt und anschließend getrocknet werden. Nach der "in-situ"-Hydrophobierung werden im allgemeinen Entschäumer auf Silikonöl-Kieselsäurebasis dadurch hergestellt, daß eine Dispersion hydrophiler Kieselsäureteilchen im Organopolysiloxan unter intensivem Rühren erhitzt wird. Gewünschtenfalls können basische Katalysatoren wie Alkali- oder Erdalkalimetallhydroxyde sowie vorzugsweise Alkalimetallsilanolate, dabei mitverwendet werden (vgl. H. Ferch et al, Schriftenreihe Pigmente-Degussa, Teil 42 (1987)).

Daneben eignen sich als feste Entschäumerbestandteile auch hydrophobe Materialien wie Polyethylen niedrigen Molekulargewichts, Polyester und Amide langkettiger Fettsäuren.

In den Entschäumern können sowohl Feststoffe aus einer Komponente als auch solche aus Mischungen verschiedener Materialien enthalten sein. Typischerweise beträgt der Feststoffgehalt im Entschäumer zwischen 1 und 40 Gew.-%, bezogen auf das Gesamtgewicht des Entschäumers.

Für das erfindungsgemäße Verfahren kommen besonders Entschäumer in Betracht, die eine Dispersion eines Dimethylpolysiloxanes oder eines fluorierten Organopolysiloxanes in Wasser oder einem anderen polarenorganischen Medium sind und die 0 bis 40 Gew.-%, bezogen auf das Gesamtgewicht des Entschäumers, einer synthetischen Kieselsäure sowie als bevorzugten Emulgator einen Polyglycolether enthalten.

Die Entschäumer können auch von 0 bis 5 Gew.-% eines tertiären Amins wie Triethanolamin enthalten. Es hat sich als besonders zweckmäßig erwiesen, von 0.001 bis 1 Gew.-%, bezogen auf die gesamte Reaktionsmasse, an Entschäumer zu verwenden.

Zur Herstellung der Polyphenylenether sind solche einwertigen Phenole von besonderem Interesse, die in den beiden ortho-Stellungen substituiert sind. Zusätzlich können die Phenole auch noch einen Substituenten in der meta-Position tragen.

Als Beispiele für Substituenten sind Halogenatome wie Chlor und Brom und Alkylreste mit 1 bis 4 Kohlenstoffatomen, die vorzugsweise kein α-ständiges tertiäres Wasserstoffatom tragen, z.B. Methyl-, Ethyl-, Propyl- oder Butylreste zu nennen. Die Alkylreste können ihrerseits durch Halogenatome wie Chlor oder Brom oder durch Hydroxylgruppen substituiert sein. Weitere Beispiele möglicher Substituenten sind Alkoxyreste, vorzugsweise mit bis zu 4 Kohlenstoffatomen und Phenylreste, die gewünschtenfalls durch Halogenatome und/oder Alkylgruppen substituiert sein können. Ebenfalls geeignet sind Mischungen verschiedener Phenole, z.B. von 2,6-Dimethylphenol und 2,3,6-Trimethylphenol, wobei man die entsprechenden Copolymeren erhält.

Beispiele für gut geeignete Phenole sind: 2,6-Dimethyloxyphenol, 2,6-Diethoxyphenol, 2-Ethoxy-6-methoxyphenol, 2,6-Dichlorphenol, 2-Methyl-6-phenylphenol und 2,6-Diphenylphenol.

Bevorzugt werden Phenole eingesetzt, bei denen die Substituenten Alkylreste, insbesondere $C_1$-$C_4$-Alkylreste

sind, wie 2,6-Dimethylphenol, 2,6-Diethylphenol, 2-Ethyl-6-methylphenol, 2-Methyl-6-propylphenol, 2,6-Dipropylphenol und 2-Ethyl-6-propylphenol.

Ganz besonders bevorzugt ist 2,6-Dimethylphenol, das nach den in der Literatur (vgl. Houben-Weyl-Müller, Methoden der organischen Chemie, Phenole, Teil 2, Band 611 C, Georg-Theime Verglag, Stuttgart, 1976, S. 1187 ff und dort zitierte Literatur) beschriebenen Methoden von den bei der Polymerisation störenden Phenolen, wie unsubstituiertes Phenol, o-Kresol, p-Kresol, m-Kresol und den mehrkernigen Phenolen, wie 2,6-Dimethyl-1-hydroxydiphenyl abgetrennt worden ist.

Die nach dem definitionsgemäßen Verfahren aus den einwertigen Phenolen hergestellten hochmolekularen Polyphenylenether weisen im allgemeinen Molekulargewichte $\overline{M}_w$ von 15 000 bis 90 000, bevorzugt 20 000 bis 60 000 auf.

Zur Ausführung der Polykondensation werden üblicherweise sauerstoffhaltige Gase, wie Luft oder Sauerstoff, in die 10 bis 60, vorzugsweise 20 bis 50°C warme Lösung der Monomeren in Gegenwart eines Oxidationskatalysators eingeleitet. Die Sauerstoffdurchflußgeschwindigkeit beträgt 1 bis 15 $m^3$/h, bevorzugt 3 bis 10 $m^3$/h.

Bei den für die Polykondensation bekannten Oxidationskatalysatoren handelt es sich um Systeme aus einem Metall und einer organischen Verbindung, so z.B. Kombinationen aus einem Metall und Alkoholaten, Phenolaten, Amidinen oder Aminen. Vorzugsweise werden Kombinationen aus Aminen und einem Kupfersalz verwendet.

Die primäre, sekundäre oder tertiäre Aminkomponente des Katalysatorkomplexes entspricht denjenigen, die in den vorgenannten Patenten beschrieben sind. Typische Vertreter sind aliphatische Amine, in denen die aliphatische Gruppe gradkettige oder verzweigtkettige Kohlenwasserstoffe oder cycloaliphatische Kohlenwasserstoffe darstellen. Bevorzugt sind aliphatische Monoamine. Besonders bevorzugt sind Mono-, Di- und Trialkylamine, wobei die Alkylgruppen 1 bis 12 Kohlenstoffatome aufweisen. Typischerweise können mono-, di- und trimethyl-, ethyl-, n-propyl-, i-propyl-, n-butylsubstituierte Amine, Mono- und Dicyclohexylamin, Ethylmethylamin, Morpholin, N-alkyl-cycloaliphatische Amine wie N-Methylcyclohexylamin verwendet werden. Weiterhin können cyclische tertiäre Stickstoffbasen, wie Pyridin, alpha-Collidin und gamma-Picolin benutzt werden.

Mischungen solcher primärer, sekundärer und tertiärer Amine können, falls gewünscht, ebenfalls Anwendung finden. Ein besonders bevorzugtes Monoalkylamin ist n-Butylamin; ein besonders bevorzugtes Dialkylamin ist Di-n-butylamin; und ein besonders bevorzugtes Trialkylamin ist Triäthylamin. Eine bevorzugte cyclische tertiäre Stickstoffbase ist Pyridin.

Besonders bevorzugte Mischungen enthalten N,N'-Di-t-butylethylendiamin und Di-n-butylamin. Die Konzentration des primären und sekundären Amins in der Reaktionsmischung kann innerhalb weiterer Grenzen variieren. Bevorzugt werden jedoch niedrige Konzentrationen. Der Bereich umfaßt etwa 1 bis 40 mol-%, bezogen auf das eingesetzte Phenol. Vorzugsweise werden 15 bis 35 mol-%, bezogen auf das eingesetzte Phenol, verwendet. Im Fall eines tertiären Amins ist der bevorzugte Bereich wesentlich höher und umfaßt von etwa 500 bis 1500 Mol pro 100 Mol des monovalenten Phenols.

Typische Beispiele der Kupfer-I-Salze und der Kupfer-II-Salze, die für das Verfahren geeignet sind, finden sich in den vorgenannten Patenten. Dieselben umfassen Kupfer-I-chlorid, Kupfer-II-bromid, Kupfer-II-sulfat, Kupfer-II-azid, Kupfer-II-tetraminsulfat, Kupfer-II-azetat, Kupfer-II-butyrat und Kupfer-II-toluat. Bevorzugte Kupfer- und Kupfer-II-Salze sind die Halogenide, Alkanoate oder Sulfate, z.B. Kupfer-I-bromid und Kupfer-I-chlorid oder Kupfer-II-azetat. Mit primären und sekundären Aminen wird, wie es von Vorteil ist, die Konzentration der Kupfersalze niedrig gehalten. Die Konzentrationen liegen bei etwa 0,1 bis 0,9 mol, vorzugsweise 0,4 bis 0,6 mol pro 100 mol des Monomeren. Mit tertiären Aminen wird das Kupfersalz vorzugsweise in einer Menge von etwa 5 bis 15 mol pro 100 mol des einwertigen Phenols verwendet.

Für das Verfahren geeignete Lösungsmittel sind $C_6$-$C_{10}$-Kohlenwasserstoffe wie Ethylbenzol, Xylol, Diethylbenzol und deren Gemische, wobei vorzugsweise Ethylbenzol oder Toluol verwendet wird. Meistens liegt das Gewichtsverhältnis von Lösungsmittel zum Monomeren im Bereich von 1 : 1 bis 10 : 1. Gewichtsverhältnisse kleiner als 1 : 1 empfehlen sich weniger und solche größer als 20 : 1 bringen in der Regel keine wesentlichen Vorteile.

Falls erwünscht kann der Reaktionsmischung ein Aktivator wie ein Diarylamiden oder ein Diarylformamidin zugegeben werden (siehe US-A 3 554 515).

Die Polykondensation kann sowohl kontinuierlich als auch diskontinuierlich durchgeführt werden.

In einer besonders günstigen Reaktionsführung werden der Oxidationskatalysator sowie der Entschäumer im organischen Lösungsmittel vorgelegt. Unter Einleitung des sauerstoffhaltigen Gases wird das Monomere, oder eine Lösung des Monomeren in einem organischen Lösungsmittel zugegeben.

Wenn das gewünschte Molekulargewicht erreicht ist, kann die Reaktionslösung mit komplexbildenden Verbindungen wie den Natriumsalzen der Ethylendiamintetraessigsäure, der Nitrotriessigsäure oder anderen Polyaminocarbonsäuren behandelt werden, um die Metallionen des Oxidationskatalysators zu entfernen. Die Art und Weise der Zugabe der Komplexierungsmittel ist dabei unkritisch. So können die komplexbildenden Verbindungen sowohl in Substanz als auch in wäßriger Lösung in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Abtrennung der Metallkomponente erfolgt dabei durch Phasentrennung.

Die Kontaktzeit des komplexbildenden Agens mit der Polyphenylenether-Phase kann je nach System sehr unterschiedlich lang sein. Bevorzugt werden Reaktionszeiten von 1 Minute bis 5 Stunden. Häufig genügen Reaktionszeiten von 5 bis 30 Minuten. Die bevorzugte Reaktionstemperatur liegt zwischen 25 und 80°C, jedoch sind auch Temperaturbereiche darunter und darüber anwendbar, von etwa 20°C bis etwa 90°C.

Nach der Entfernung der metallischen Komponenten in Form ihrer Komplexe kann der Polyphenylenether aus der Lösung nach den in den eingangs erwähnten US-Patentschriften beschriebenen Verfahren isoliert werden. So kann z.B. der Polyphenylenether durch Ausfällen aus der Reaktionslösung mittels eines Überschusses an einem Alkohol, z.B. Methanol, isoliert werden. Bevorzugt ist es aber, das Lösungsmittel durch mehrmaliges Verdampfen bei erhöhter Temperatur und erniedrigtem Druck zu entfernen.

Enthält der Oxidationskatalysator eine Aminkomponente, kann diese durch Destillation oder nach anderen herkömmlichen Verfahren zurückgewonnen werden.

Die nach dem erfindungsgemäßen Verfahren hergestellten Polyphenylenether können nach herkömmlichen Verfahren beispielsweise zu Filmen, Bändern, Fasern oder ausgeformten Gegenständen verarbeitet und dementsprechend für alle die Zwecke angewendet werden, die auch in den vorgenannten Patentschriften beschrieben sind. Sie können mit verschiedenartigen Füllstoffen, Verstärkungsmitteln, Stabilisatoren, Weichmachern und dergleichen gemischt werden. Falls gewünscht können sie mit Farbstoffen oder Pigmenten gefärbt werden. Es ist auch möglich, mit den erfindungsgemäß hergestellten Polyphenylenethern Mischungen mit anderen Polymeren, insbesondere Polystyrol, das vorzugsweise schlagzäh modifiziert ist, herzustellen, wobei derartige Mischungen beispielsweise aus den US-A 3 383 435 und der DE-C3-22 11 005 bekannt sind. Mischungen aus vorzugsweise schlagzäh modifizierten Verfahrensprodukten und Polyamiden, die ebenfalls schlagzäh modifiziert sein können, weisen gute mechanische Eigenschaften auf (vgl. EP-B1-46 040, EP-A1-236 593, WO 86/2086, WO 87/540).

Nach dem erfindungsgemäßen Verfahren werden hochmolekulare Polyphenylenether in verkürzten Reaktionszeiten erhalten. Außerdem hat das erfindungsgemäße Verfahren den Vorteil, daß die Verfahrensprodukte eine sehr helle Eigenfarbe aufweisen. Dementsprechend sind auch Mischungen derselben mit anderen Polymeren wesentlich heller als Mischungen, die Polyphenylenether, die nach den sonst üblichen Verfahren hergestellt werden, enthalten.

Beispiele

I) Herstellung der Polyphenylenether

In einem 1200 l Rührkessel wurden 780 kg Toluol und der Oxidationskatalysator A bzw. B sowie 12 kg des Entschäumers (a) bzw. (b) vorgelegt. Innerhalb von 210 Minuten wurden unter Sauerstoffbegasung 154,4 kg 2,6-Dimethylphenol mit einer Dosiergeschwindigkeit von 44,1 kg/h zugegeben, wobei die Reaktionslösung intensiv durchmischt wurde.

Die Reaktionstemperatur betrug 35°C und der Sauerstoffdurchfluß 4 m³/h. Die jeweiligen Reaktionszeiten sind Tabelle 1 zu entnehmen.

Nach beendeter Polykondensation wurde die Reaktion mit 72 kg einer 10 %igen wäßrigen Ethylenamintetraessigsäuredinatriumlösung und 32 kg Wasser bei 70 bis 80°C zweimal extrahiert. Anschließend wurde die wäßrige Phase abgetrennt und das Lösungsmittel durch Verdampfen entfernt.

Oxidationskatalysatoren

A) 0,95 kg Kupfer-I-bromid
43,35 kg Toluol
52,20 kg Di-n-butylamin

B) 0,95 kg Kupfer-I-bromid
43,35 kg Toluol
52,20 kg Di-n-butylamin
0,60 kg N,N'-Di-t-butylethylendiamin

Entschäumer

a) 87,5 Gew.-% naphthenisches Mineralöl
1,6 Gew.-% Polydimethylsiloxan
6,8 Gew.-% hochdisperse Kieselsäure
1,6 Gew.-% Triethanolamin

b)   75,0 Gew.-% fluoriertes Polysiloxan
     21,7 Gew.-% hochdisperse Kieselsäure
     3,3 Gew.-% Oleylpolyglykolether

Tabelle 1

| Beispiel | Katalysator | Gehalt | Entschäumer | Reaktionszeit [min] | Viskositätsindex eta [dl/g] |
|---|---|---|---|---|---|
| | | [Gew.-%] | | | |
| | | a) | b) | | |
| 1V$^{\alpha)}$ | A | - | - | 270 | 0,41 |
| 1 | | 0,09 | | 270 | 0,45 |
| | | | | | |
| V$^{\alpha)}$ | B | - | - | 240 | 0,37 |
| 2 | | 0,09 | | 230 | 0,42 |
| 3 | | | 0,09 | 230 | 0,41 |
| 4 | | 0,09 | | 225 | 0,47 |
| 5 | | | 0,9 | 225 | 0,48 |

$^{\alpha)}$ zum Vergleich

Wie aus der Tabelle zur erkennen ist, nimmt die Viskosität (bestimmt mittels eines Uebbelodeviskosimeters bei 25°C als 1 %ige Lösung in Chloroform) und damit das Molekulargewicht bei gleichbleibender Reaktionszeit zu.

II) Farbqualitäten

Herstellung der Polymermischungen

Die jeweiligen Komponenten wurden bei 280°C in einem Zweiwellenextruder intensiv vermischt. Aus den Mischungen wurden bei 280°C durch Spritzguß 60 mm Rundscheiben hergestellt, und die Farbqualität wurde durch Remissionsmessung (gemäß DIN 6164) bestimmt.

II,1) Polystyrol-Polyphenylenether-Mischungen

Komponenten

PPE:     Polyphenylenether (s. Tab. 2)

HIPS:    handelsübliches schlagfestes Polystyrol, mit 7,9 Gew.-% Polybutadien, mittlere Teilchengröße der Kautschuk-phase 5-6 μm

Schlagzähmodifier:

Dreiblockkautschuk mit Styrolendblöcken und einem elastomeren Mittelblock aus hydriertem Polybutadien, Styrolanteil 28 Gew.-%

Weißpigment: Titandioxid

Tabelle 2

| Beisp. | PPE | | HIPS | Schlagzähmodifizier [Gew.-Tl.] | Weißpigment [Gew.-Tl.] | Remission [%] |
|---|---|---|---|---|---|---|
| | [Gew.-Tl.] | | | | | |
| 6 V | 1V | 50 | 50 | 3 | 5 | 62 |

Tabelle 2 (fortgesetzt)

| Beisp. | PPE | | HIPS | Schlagzähmodifizier [Gew.-Tl] | Weißpigment [Gew.-Tl.] | Remission [%] |
|---|---|---|---|---|---|---|
| | [Gew.-Tl.] | | | | | |
| 6 | 4 | 50 | 50 | 3 | 5 | 68 |
| 7 V | 1V | 60 | 40 | - | - | 53 |
| 7 | 4 | 60 | 40 | - | - | 60 |

II.2) Polyamid-Polyphenylenether-Mischungen

Komponenten

PPE:  Polyphenylenether 1V* bzw. 4*

Polyamid, PA(1):

Polyamid 66, mit einer Viskositätszahl von 143 cm$^3$/g (nach DIN als 10,5 %ige Lösung in konzentrierter $H_2SO_4$)

Polyamid, PA(2):

Polyamid 6, mit einer Viskositätszahl von 150 cm$^3$/g (nach DIN als 10,5 %ige Lösung in konzentrierter $H_2SO_4$)

Schlagzähmodifizier:

Dreiblockkautschuk mit Styrolendblöcken und einem elastomeren Mittelblock aus hydriertem Polybutadien, Styrolanteil 28 Gew.-%.

Weißpigment: Titandioxid

Tabelle 3

| Beisp. | PPE | | PA | | Schlagzähmodifizierer | Weißpigment | Remission |
|---|---|---|---|---|---|---|---|
| | [Gew.T1.] | | | | [Gew.T1.] | [Gew.T1.] | [%] |
| 8V | 1V* | 44 | PA(1) | 44 | 12 | 2 | 39 |
| 8 | 4* | 44 | PA(1) | 44 | 12 | 2 | 48 |
| 9V | 1V* | 50 | PA(2) | 40 | 10 | 2 | 37 |
| 9 | 4* | 45 | PA(2) | 40 | 10 | 2 | 45 |

**Patentansprüche**

1. Verfahren zur Herstellung von Polyphenylenethern aus einwertigen Phenolen durch oxidative Kupplungsreaktion mit sauerstoffhaltigen Gasen in Anwesenheit eines Oxidationskatalysators in einem organischen Lösungsmittel, dadurch gekennzeichnet, daß man die Polykondensation in Gegenwart von 0,001 bis 1 Gew.-%, bezogen auf die gesamte Reaktionsmasse, an naphthenischen oder paraffinischen Mineralölen, paraffinischen Kohlenwasserstoffwachsen, Fettsäureestern mono- oder polyfunktioneller Alkohole, Fettsäureamiden, Fettsäuresulfonamiden oder Organopolysiloxanen als Entschäumer durchführt.

2. Verfahren nach Anspruch 1, dadurch gekennzeichnet, daß man einen Entschäumer verwendet, der einen teilchenförmigen, unter den Reaktionsbedingungen inerten, Feststoff enthält.

3. Verfahren nach den Ansprüchen 1 oder 2, dadurch gekennzeichnet, daß man den Entschäumer in Form einer wäßrigen Dispersion einsetzt.

* zur Verbesserung der Phasenhaftung wie folgt modifiziert: 99 Gew.-% Polyphenylenether und 1 Gew.-% Maleinsäureanhydrid wurden in einem Zweiwellenextruder bei 290°C in der Schmelze intensiv durchmischt. Die Schmelze wurde ausgetragen, in einem Wasserbad abgekühlt und der Strang granuliert.

4. Verfahren nach den Ansprüchen 1 oder 2, dadurch gekennzeichnet, daß man einen Entschäumer verwendet, der eine Dispersion in einem polaren organischen Medium ist.

5. Verfahren nach den Ansprüchen 1 bis 4, dadurch gekennzeichnet, daß man als Entschäumer ein Organopolysiloxan verwendet.

6. Verfahren nach den Ansprüchen 1 bis 5, dadurch gekennzeichnet, daß man als Organopolysiloxan Polydimethylsiloxan verwendet.

7. Verfahren nach den Ansprüchen 1 bis 5, dadurch gekennzeichnet, daß man als Organopolysiloxan ein fluoriertes Organopolysiloxan verwendet.

8. Verfahren nach den Ansprüchen 1 bis 4, dadurch gekennzeichnet, daß man als Entschäumer ein Mineralöl verwendet.

9. Verfahren nach den Ansprüchen 2 bis 8, dadurch gekennzeichnet, daß man als Feststoff synthetische hydrophobierte Kieselsäure einsetzt.

**Claims**

1. A process for preparing polyphenylene ethers from monohydric phenols by oxidative coupling with oxygen-containing gases in the presence of an oxidation catalyst in an organic solvent, which comprises carrying out the polycondensation in the presence of a defoamer comprising from 0.001 to 1% by weight, based on the total reaction mass, of naphthenic or paraffinic mineral oils, paraffinic hydrocarbon waxes, fatty acid esters of mono- or polyfunctional alcohols, fatty acid amides, fatty acid sulfonamides or organopolysiloxanes.

2. A process as claimed in claim 1, wherein the defoamer used includes a particulate solid that is inert under the reaction conditions.

3. A process as claimed in claim 1 or 2, wherein the defoamer is used in the form of an aqueous dispersion.

4. A process as claimed in claim 1 or 2, wherein the defoamer used is a dispersion in a polar organic medium.

5. A process as claimed in any of claims 1 to 4, wherein the defoamer used is an organopolysiloxane.

6. A process as claimed in any of claims 1 to 5, wherein the organopolysiloxane used is a polydimethylsiloxane.

7. A process as claimed in any of claims 1 to 5, wherein the organopolysiloxane used is a fluorinated organopolysiloxane.

8. A process as claimed in any of claims 1 to 4, wherein the defoamer used is a mineral oil.

9. A process as claimed in any of claims 2 to 8, wherein the solid used is synthetic hydrophobicized silica.

**Revendications**

1. Procédé de préparation de poly(phénylène éthers) à partir de monophénols par réaction de copulation par voie d'oxydation avec des gaz contenant de l'oxygène en présence d'un catalyseur d'oxydation dans un solvant organique, caractérisé en ce que l'on conduit la polycondensation en présence de 0,001 à 1% en poids, par rapport à la masse réactionnelle totale, d'huiles minérales naphténiques ou paraffiniques, de cires hydrocarbonées paraffiniques, d'esters d'acides gras et d'alcools mono- ou polyfonctionnels, d'amides d'acides gras, de sulfonamides d'acides gras ou d'organopolysiloxanes servant d'agent antimoussant.

2. Procédé selon la revendication 1, caractérisé en ce que l'on utilise un agent antimoussant qui contient une matière solide particulaire, inerte dans les conditions de la réaction.

**3.** Procédé selon la revendication 1 ou 2, caractérisé en ce que l'on utilise l'agent antimoussant sous forme d'une dispersion aqueuse.

**4.** Procédé selon la revendication 1 ou 2, caractérisé en ce que l'on utilise un agent antimoussant qui est une dispersion dans un milieu organique polaire.

**5.** Procédé selon l'une quelconque des revendications 1 à 4, caractérisé en ce que l'on utilise, comme agent antimoussant, un organopolysiloxane.

**6.** Procédé selon l'une quelconque des revendications 1 à 5, caractérisé en ce que l'on utilise, comme organopolysiloxane, du polydiméthylsiloxane.

**7.** Procédé selon l'une quelconque des revendications 1 à 5, caractérisé en ce que l'on utilise, comme organopolysiloxane, un organopolysiloxane fluoré.

**8.** Procédé selon l'une quelconque des revendications 1 à 4, caractérisé en ce que l'on utilise, comme agent antimoussant, une huile minérale.

**9.** Procédé selon l'une quelconque des revendications 2 à 8, caractérisé en ce que l'on utilise, comme matière solide, de l'acide silicique synthétique rendu hydrophobe.